# EUROPEAN PATENT SPECIFICATION

(11) **EP 0 409 211 B1**
(45) Date of publication and mention of the grant of the patent: **05.07.1995**
(21) Application number: 90113788.5
(22) Date of filing: 18.07.1990
(51) Int. Cl.: H04N 7/167

(54) **Universal decoder**
Universaldekodierer
Décodeur universel

(30) Priority: 21.07.1989 US 382899
(43) Date of publication of application: 23.01.1991
(73) Proprietor: TV/COM Technologies, Inc., San Diego, California (US)
(72) Inventor: Harney, Ralph P., Poway, CA 92064 (US); Hightower, Michael L., San Diego, CA 92131 (US); Wechselberger, Anthony J., Escondido, CA 92025 (US)
(74) Representative: Grünecker, Kinkeldey, Stockmair & Schwanhäusser Anwaltssozietät

(56) References cited:
- EP-A- 0 187 483
- US-A- 4 222 068
- US-A- 4 336 553
- US-A- 4 338 628

## Description

### Summary of the Invention

Many television video encoding schemes suppress synchronizing (sync) pulses in order to render a picture unintelligible on an ordinary TV receiver. The decoders used in these schemes use dedicated discrete logic devices or custom logic integrated circuits and may also include an oscillator that is phase locked to a timing signal in order to generate a sync restoration gate.

The present invention relates to a microprocessor based universal decoding module which is programmed to decode one or more types of encoded television video signals.

One purpose of the invention is a decoder that accepts timing signals at the input ports of a microprocessor which then directly develops a sync restoration gate, under control of a stored program, and delivers said gate to a microprocessor output port.

Another purpose of the invention is a universal decoder of the type described which is programmed to decode several types of suppressed sync encoding, including video inversion encoding, with the decoder option being selected through a hard wire or strap on the decoder, or by addressing the decoder from a cable television head end.

Another purpose is a universal decoder module as described in which the sync suppressed encoding is decoded through the use of timing signals which are in the vertical blanking interval (VBI) of the video signal, with the timing signal being either the unsuppressed horizontal and vertical sync in the VBI or specially formed timing signals incorporated in the VBI at the encoder.

Another purpose is a universal decoder module as described which may accomodate several types of sync suppressed encoding, including video inversion and including encoding in which the sync suppression depth is dynamically varied.

Another purpose is an add-on universal decoder module which may be used with RF attenuated suppressed sync, video inversion encoding, and level shifting horizontal sync supression.

Another purpose is a universal decoder module as described in which a specially formed timing signal may be placed in the VBI at the encoder for use in decoding suppressed sync encoded video signals.

Other purposes will appear in the ensuing specification, drawings and claims.

### Brief Description of the Drawings

The invention is illustrated diagrammatically in the following drawings wherein:
Figure 1 is a block diagram of one type of decoder module, as installed in a CATV converter,
Figure 2 is a wave form diagram of the decoder module of Figure 1 showing the relationship between suppressed horizontal sync, the sync gate, restored horizontal sync, and horizontal timing signals,
Figure 3 is a program flow chart for the decoder module of Figure 1,
Figure 4 is a block diagram of a decoder module arranged to decode another type of suppressed sync encoded video signal,
Figure 5 is a waveform diagram of the VBI timing signal for the decoder module of Figure 4, and
Figure 6 is a program flow chart of the decoder module of Figure 4.

### Description of the Preferred Embodiment

A great many of the currently used television encoding techniques suppress synchronizing pulses in order to render a TV picture unintelligible to an ordinary television set.

In US-A-4 222 068 the horizontal sync pulses are randomly suppressed by suppressing their amplitude. They are restored by rebiasing the video signal upon detection of a suppressed amplitude during the front porch of a horizontal blanking pulse.

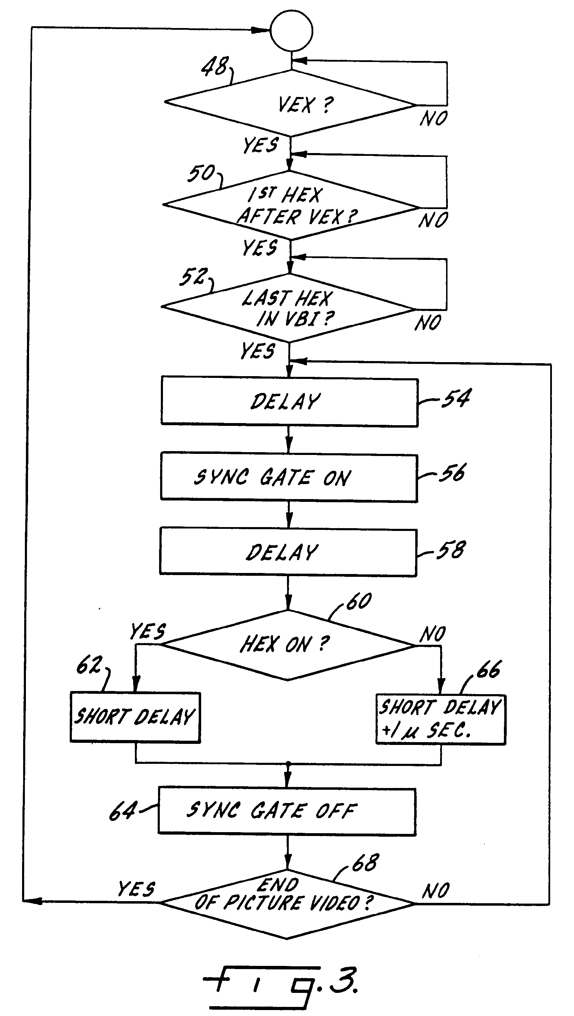

Of the options currently in use, there is suppression of sync pulses during an entire video field and suppression of the sync pulses during picture video only, with both horizontal and vertical sync remaining at normal levels during the vertical blanking interval (VBI). Sync may be suppressed in a number of different ways. There may be a shift in the level of the sync pulses and this is done primarily when the video signal is at baseband frequency. Sync may also be suppressed by attenuation of the sync pulses at RF or at baseband and there may be a variation in the attenuation applied to the sync pulses on a field by field basis, and this variation may be random or may be related to some portion of the video signal. A suppressed horizontal sync pulse is shown in Figure 2. There is a leading guard band (before the H-sync pulse) and a trailing guard band (after the color burst), each of which is about 2 microseconds wide. The guard bands allow for a timing variation of the sync restoration gate generated in a decoder, which starts during the leading guard band and ends during the trailing guard band. The horizontal sync pulse and both guard bands normally occur during the overscan period on a TV screen and thus are invisible to the viewer.

Under present cable television practice, once a particular cable system has committed to a particular type of video signal encoding, all decoders must be of the same type or must be the product of a single manufacturer. This unreasonably limits a particular cable company in its purchase of new decoders.

The present invention provides a universal decoder in that the decoder module has multiple programs so that it may be used to decode several different types of sync suppressed video encoding. The decoder module may be used in connection with various types of cable television converters to the end that a cable system operator no longer will be required to buy decoders from a particular source, but rather can buy converters containing universal decoder modules from different sources. A cable system may also change over to a new encoding system gradually by installing new decoders that contain a universal decoder module that is compatible with the old encoding system.

The present invention will be described in connection with a cable television converter that incorporates the type of encoding system shown in U.S. Patent 4,336,553 which is essentially the same type of encoding system as shown in U.S. Patents 4,340,906 and 4,353,088. It should be understood that the universal decoder module of the present invention can be used with any number of different cable television converters and/or decoders and in no sense should be limited to use with the specific encoding system disclosed in the '553 patent.

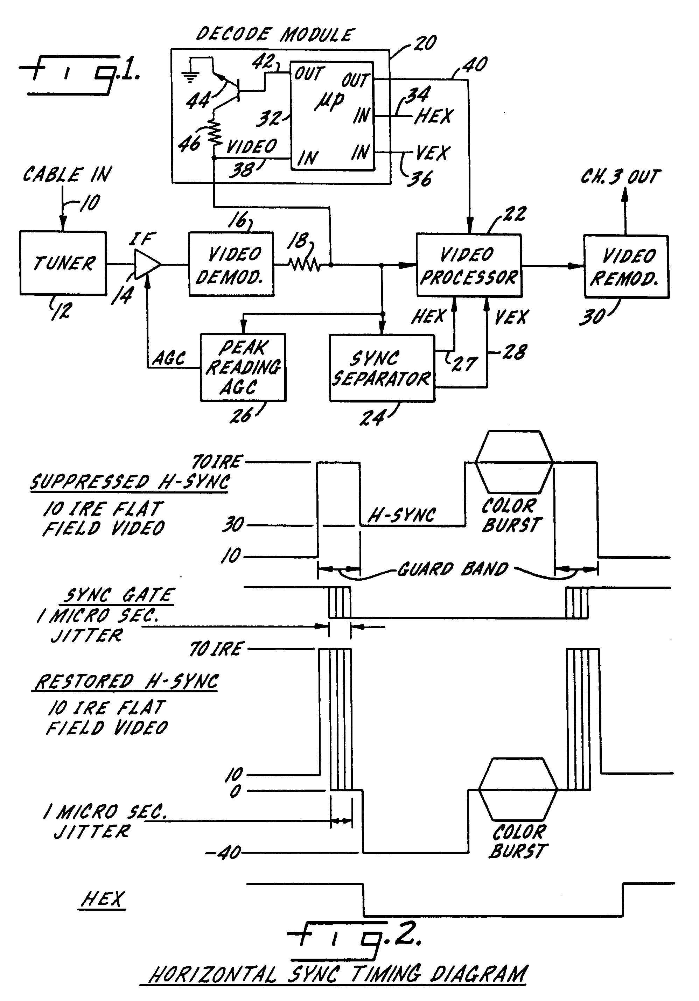

In Figure 1, a cable input 10 provides incoming video at RF to a tuner 12. The output from tuner 12, the video at a suitable intermediate frequency, is connected to an IF amplifier 14 which in turn is connected to a video demodulator 16 which provides the video signal at baseband or video frequency. The output from video demodulator 16 is connected through a resistor 18 to a decode module 20 which provides one of the inputs to a video processor 22.

A sync separator 24 and a peak reading AGC circuit 26 receive inputs of baseband video, with the sync separator being effective to provide the horizontal sync timing signal (HEX) on line 27 and the vertical sync timing signal (VEX) on line 28. The HEX and VEX signals are provided to video processor 22 and to decoder module 20. The output from the peak reading AGC circuit is connected to IF amplifier 14 which provides the gain for the amplifier to maintain the video signal in the converter/decoder at desired voltage levels. With the exception of decoder module 20, the remaining circuits are used in the commercial implementation of the encoding system of the ′553 patent.

The video signal which is supplied to tuner 10 has suppressed horizontal sync. In this particular embodiment of the invention the level of the sync has been suppressed only during the horizontal sync interval of the picture portion of the video. There is no suppression of horizontal or vertical sync during the VBI. The decode module 20 is effective to restore the level of the horizontal sync pulses which had been suppressed at the encoder and the video signal with restored horizontal sync during the picture video is the input to video processor 22. The HEX and VEX signals from the sync separator are used in the video processor and the fully restored video signal is then remodulated in modulator 30 to a locally unused channel, for example channel 3, as is conventional in cable television systems.

Decoder module 20 includes a microprocessor 32 which may, for example, be an Intel 8051 type. Microprocessor 32 includes a CPU, program memory, data memory, I/O ports and other peripheral circuits such as a timer, all contained in one or more integrated circuit(s). Microprocessor 32 has HEX and VEX inputs 34 and 36 and a video input 38. The microprocessor has an output on line 40 which controls video signal inversion as will be described later. Microprocessor 32 also has an output on line 42 to a transistor 44 which functions through resistor 46 and resistor 18 as a pulldown circuit to restore the level of horizontal sync in accordance with instructions from the microprocessor.

Figure 2 shows the relationship between the waveform of suppressed horizontal sync, the sync gate, restored horizontal sync and HEX. Figure 3 is a flow chart for the program in the microprocessor which functions to control the outputs as described.

In Figure 2, the normal IRE levels for a horizontal sync pulse and the color burst are indicated in that portion of the diagram designated "restored horizontal sync." The suppressed horizontal sync shows that the level of the sync pulse between the leading and trailing guard bands has been suppressed 70 IRE from a normal sync level of -40 IRE to a suppressed sync level of +30 IRE. The color burst has been similarly level changed. As mentioned above, the leading and trailing guard bands are each about 2 microseconds wide. Microprocessor 32 has an instruction cycle time of one microsecond and its clock signal is asynchronous to the incoming sync pulses of the video signal. The horizontal sync gate, generated by microprocessor 32, will thus have a timing variation (jitter) of one microsecond relative to the horizontal sync pulse. The horizontal sync gate, which is shown to have a one microsecond jitter, is shown between the suppressed horizontal sync waveform and the restored horizontal sync waveform, with the sync gate starting during the leading guard band and ending during the trailing guard band. The sync gate is used to control the restoration of horizontal sync to a normal IRE level. The HEX waveform in Figure 2 is triggered by and approximately coincident with the start of the horizontal sync pulse.

The Figure 3 flow chart describes the program followed by microprocessor 32 in restoring the IRE levels of suppressed horizontal sync in a video baseband encoding or scrambling system in which the horizontal and vertical sync pulses in the VBI have not been suppressed. The first step 48 in the program is a search for the VEX signal, and once there is a VEX input to the microprocessor, the next step, as represented at 50, is to determine the first HEX after VEX. A yes output from step 50 initiates step 52 which is to seek the last HEX in a particular vertical blanking interval. When there is an affirmative answer to the test of step 52, after a short delay represented by step 54, the horizontal sync gate will begin, as represented by step 56. As shown in Figure 2, the sync gate begins during the leading guard band and continues until its termination in the trailing guard band. The one microsecond jitter from the microprocesser clock, which occurs at the beginning and end of the sync gate and is shown in the restored sync, has no effect on the restored sync. After the sync gate has been turned on, as represented by step 56, there is a short delay represented by step 58, with the next step indicated at 60 representing a test as to whether or not the HEX signal is on. If the HEX signal is on, after a short delay indicated by step 62, the sync gate will be turned off, as represented by step 64. If the HEX is not on at step 60, there is a short delay, +1 microsecond, represented by step 66, after which the sync gate is turned off.

The difference between the delays, as represented by steps 62 and 66, is the result of the one microsecond instruction cycle of the microprocessor and the fact that the spacing between horizontal sync pulses is approximately 63.5 microseconds. The microprocessor must switch between sync gate spacings of 63 and 64 microseconds. The HEX pulse is triggered by the restored horizontal sync and the microprocessor tests for a presence of HEX shortly after the start of the sync gate. If HEX is present at this time, a 63 microsecond spacing is selected. If HEX is not yet present, the spacing is 64 microseconds.

When the sync gate is turned off, as represented by step 64, the next step is to determine if that is the end of the picture video, as represented by step 68. If it is not the end of picture video, the program recycles to step 54, to provide horizontal sync gates to raise succeeding horizontal sync pulses in the picture video up to their proper IRE levels. If it is the end of the picture video, the program is recycled back to the beginning where the microprocessor will again search for VEX in the next VBI.

The decode module of Figure 1, having a microprocessor programmed in accordance with the flow chart of Figure 3 provides a horizontal sync gate to restore horizontal sync from the suppressed horizontal sync waveform of Figure 2 to the restored horizontal sync waveform of Figure 2. This particular example uses coding in the form of a 70 IRE level change for the horizontal sync pulses in the picture video, with the horizontal and vertical sync pulses in the VBI being unsuppressed. The decode module, as so programmed, can function to control decoding of any video signal which has been so encoded.

Many video encoding systems also use video signal polarity inversion as a form of encoding. The decode module of Figure 1 has microprocessor 32 programmed so as to accomodate such polarity inversion. Only the active or picture video between horizontal sync pulses is inverted. The encoding system disclosed in the above-mentioned ′553 patent has a video inversion circuit, as video polarity inversion is a normal part of the encoding disclosed in that patent. A video inversion sig-nal is developed by the microprocessor and provided on line 40 to the video processor and used to control the inversion of the video signal.

When a field is to be inverted, a section of a line during the preceding VBI is elevated to 100 IRE. The line section normally has a zero IRE level. The inversion flag of 100 IRE in the VBI is detected by the microprocessor at the video input and an inversion gate is developed by the microprocessor and provided to the video processor 22 in the period between horizontal sync gates.

The video inversion decoding portion of decoder module 20 has been shown in connection with a particular type of sync suppression encoding. It should be understood that video signal polarity inversion may be used with any form of sync suppression encoding.

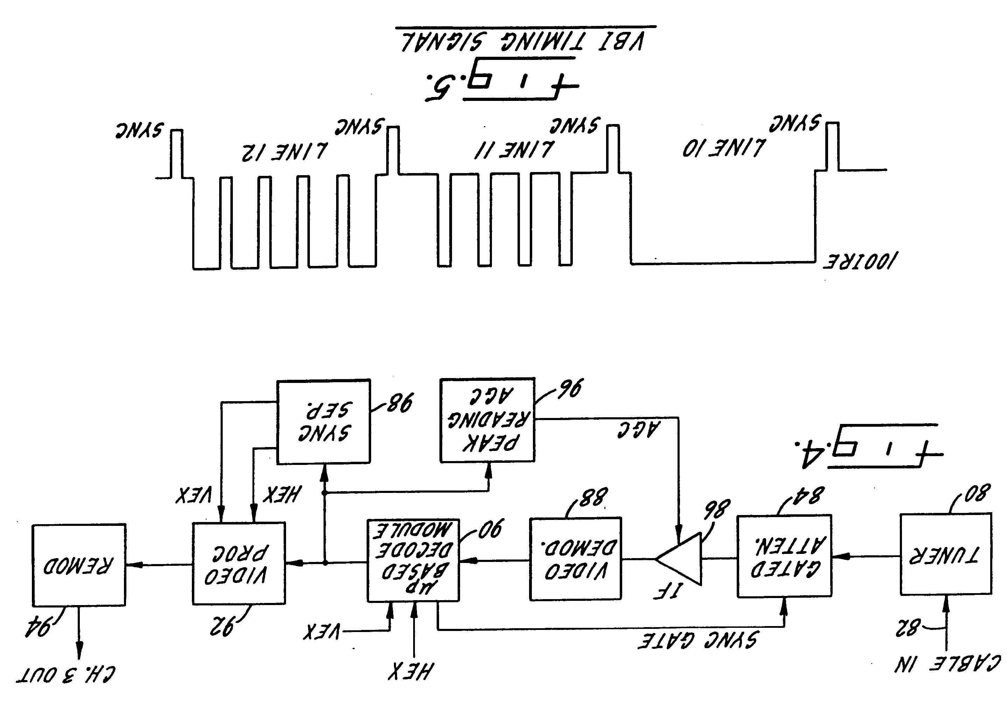

Figures 4, 5 and 6 relate to the use of the microprocessor based decoder module to decode a signal where each horizontal sync pulse is suppressed during picture video and the entire VBI (including horizontal and vertical sync) is also suppressed. Suppression is accomplished by an RF gated attenuator in the encoder. In order to decode such a video encoded signal, it is necessary to provide a timing signal and the timing signal will be placed in the VBI. Normally, such systems are decoded through the use of a timing signal carried as audio carrier amplitude modulation. However, the same decoding functions can be performed by the use of a timing signal in the VBI. In a mixed decoder system (with universal decoders added) both timing signals are carried simultaneously; the audio carrier signal for pre-existing decoders and the VBI signal for the universal decoders.

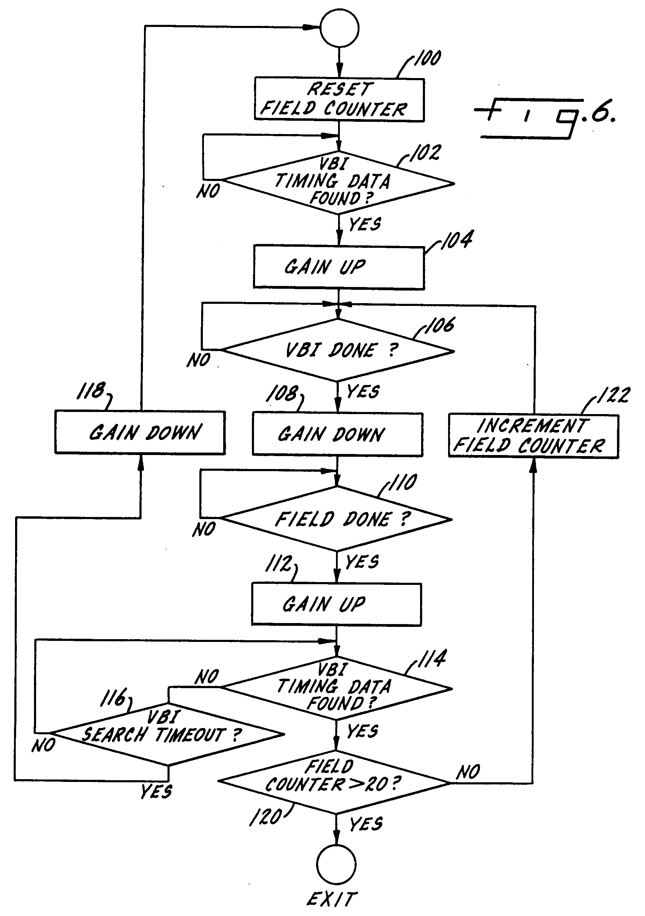

As shown in Figure 5, the timing signal, which will be read by a positive peak reader in the decode module, begins with a solid 100 IRE signal in line 10 which functions to charge the capacitor in the peak reader. Line 11 shows a known timing signal, again having a maximum level of 100 IRE. Line 12 is the complement of line 11. This particular combination of signal levels is extremely unlikely to occur on successive lines of active video and thus there is no likelihood of a false timing signal being utilized by the microprocessor. The VBI timing signal as shown in Figure 5 will have a data rate which is sufficiently slow so as to be read directly by the microprocessor in the decoder module. The head end video processor, which would add the VBI timing signal, may interface with the encoder to determine when the scrambling parameters, such as sync suppression depth, are being changed dynamically, and such changes can be inserted as data on another VBI horizontal line and passed to the decoder in real time.

Since an RF gated sync encoder attenuates the sync pulses, as opposed to level shifting as disclosed in the Figure 1-3 embodiment, the sync pull down circuit, illustrated in Figure 1, will not correctly restore horizontal sync and the color burst. An RF gated attenuator at the converter IF will properly restore the sync pulses.

As shown in Figure 4, a tuner 80 has a cable input at 82. A gated attenuator 84 is connected to the IF output of tuner 80, with the output from the attenuator being connected to an IF amplifier 86. Video demodulator 88, the microprocessor-based decode module 90, video processor 92, remodulator 94, peak reading AGC 96 and the sync separator circuit 98 are all comparable to the similarly designated circuits in Figure 1. The principal difference is that the sync gate from microprocessor 90, rather than causing a level change in the suppressed horizontal sync pulses, will increase the amplitude of the horizontal sync pulses and the entire VBI, as described in connection with the flow chart program of Figure 6.

In Figure 6, the initial step 100 is the reset of the field counter, which controls the next step indicated at 102, which is a search for the VBI timing data illustrated in Figure 5. When the timing data is found, the sync gate input to gated attenuator 84 will increase the gain during the VBI interval, as indicated by step 104. The gain will remain at an increased level, to raise the amplitude of the horizontal and vertical sync pulses within the VBI, until step 106 which has a yes output at the end of the VBI. The VBI gate timing from the timing data step 102 until the end of step 106 is determined by an internal timer in the microprocessor. The gain is then decreased, as indicated by step 108, which provides the start of step 110, which times out at for the end of the field. At the end of the field, the gain is again increased, as indicated by step 112. The gain will remain at an increased level during the time that the microprocessor is searching for the VBI timing data, as indicated in step 114. This search will continue until either the VBI timing data is found or until the VBI search time-out period is reached, as indicated by step 116. If the VBI search times out, the gain will be lowered, as indicated at step 118, and the entire cycle, beginning at the reset of the field counter, will be initiated. If the VBI timing data is found within the allocated search period, the number of fields counted is checked in step 120. If the VBI gain has been gated up for less than 20 consecutive fields, the field counter is incremented in step 122 and the cycle is repeated for another field. If the field counter count is 20, in step 120, the acquisition routine is exited.

The result of the program illustrated in Figure 6 is to settle the AGC control to provide proper IF gain and video signal level. The flow chart of Figure 6 describes what may be termed the acquisition portion of decoding. Once the VBI timing data has been successfully acquired by the microprocessor, the microprocessor enters the decode mode. This mode follows the program of Figure 3, except that the VBI timing signal is used instead of VEX and the gated attenuator is used to increase the signal level for the entire vertical blanking interval. By raising the gain of the entire vertical blanking interval, there is horizontal sync in that interval for use by the decoder to develop horizontal sync gates for the attenuated horizontal sync pulses of each horizontal line in the picture video. Thus, the program for decoding in the microprocessor for an attenuated sync pulse encoding system will function the same as the program for decoding in the sync level shifting encoding system, as shown in Figures 1-3, in that the restored horizontal and vertical sync in the VBI provides the timing for the horizontal sync gate which in turn increases the gain of the gated attenuator during the period of horizontal sync.

The present invention provides a universal decoder module which has a microprocessor with multiple programs for use in decoding different types of encoded video signals. When it has been determined which type of encoding is used on a particular cable television system, and depending on whether the system has addressable converters, the selection of the particular program needed to decode the encoded video either can be communicated to a subscriber through the address format of the cable system, or if the individual subscribers are not individually addressable, then each decoder module may be mechanically configured to accept a particular type of encoding. Such a mechanical configuration could be by a hard wire, switch or otherwise.

The invention provides a means whereby a particular cable system is not forever married to the converter/decoders of a particular manufacturer. The universal decoder is able, through one of its several programs, to decode many varieties of suppressed sync encoded video, whether or not video inversion is included in such. This has the advantage that the cable system operator may use different manufacturers' hardware and the decoder module may be used as an add-on to provide decoding for an otherwise non-decoding converter. However, some converters or decoders may not contain some of the circuitry which exists in the embodiment described above (such as the video inverter or sync separator) and this circuitry would have to be added.

Whereas the preferred form of the invention has been shown and described herein, it should be realized that there may be many modifications, substitutions and alterations thereto.

## Claims

1. A decoder for decoding suppressed sync encoded television video signals in which horizontal sync pulses are suppressed during the picture video part of a video field, characterized in that
said decoder includes a microprocessor (32) programmed to determine horizontal sync timing from timing signals in the vertical blanking interval, VBI, means (24) for providing the timing signals in the VBI to the microprocessor, a sync restoration circuit (22) connected to said microprocessor, said microprocessor being further programmed to provide a horizontal sync gate signal based on the timing signals in the VBI to said sync restoration circuit whereby said sync restoration circuit (22) restores the suppressed horizontal sync pulses.

2. The decoder of claim 1 further characterized in that the timing signals in the VBI are unsuppressed horizontal and vertical sync pulses in the VBI.

3. The decoder of claim 2 further characterized in that said microprocessor (32) is programmed to initiate its timing reconstruction cycle at the beginning of vertical sync timing and to begin the horizontal sync gate signal after the last unsuppressed horizontal sync timing signal in the VBI.

4. The decoder of claim 3 further characterized in that said microprocessor (32) is programmed to provide a horizontal sync gate signal for each suppressed horizontal sync pulse during a period of picture video.

5. The decoder of claim 1 further characterized in that horizontal sync pulse may be suppressed during the picture video by a) shifting the level of the horizontal sync pulses of a baseband video signal, or b) attentuating the horizontal sync pulses of a video signal.

6. The decoder of claim 1 further characterized in that the video encoding includes periodic inversion of video signal polarity, said microprocessor (32) being programmed to detect a video inversion flag and to provide a video inversion gate output as a result thereof.

7. The decoder of claim 1 further characterized in that the horizontal and vertical sync pulses in the original VBI are suppressed and the timing signals in the VBI are inserted in the VBI during signal encoding.

8. The decoder of claim 7 further characterized in that said microprocessor is programmed upon detection of the VBI timing signals, to increase the amplitude of the VBI including sync pulses.

9. The decoder of claim 8 further characterized in that said microprocessor (32) is programmed to utilize the increased amplitude horizontal sync pulses during each VBI to generate timing for a horizontal sync gate signal to increase the amplitude of horizontal sync pulses during picture video.

10. The decoder of claim 7 further characterized in that the VBI timing signal consists, in successive horizontal lines, of a plurality of generally equally spaced pulses in a first line and a complement of said plurality of spaced pulses in the succeeding line.

11. The decoder of claim 10 further characterized in that said VBI timing signal includes, in a horizontal line preceding the first horizontal line having a plurality of spaced pulses, a horizontal line which has a generally constant IRE level over at least a substantial portion thereof, with the IRE level being equal to that of the pulses in the succeeding line.

12. The decoder of claim 1 further characterized in that the microprocessor has a clock signal which is asynchronous with the received horizontal sync.

13. The decoder of claim 1 further characterized in that the microprocessor (32) program has multiple segments, each program segment having the capability of recognizing a particular timing signal and providing a horizontal sync restoration gate responsive to a particular version of horizontal sync suppression, said program segments being selectable by means external to the microprocessor.

14. A method of decoding suppressed sync encoded video signals in which horizontal sync is suppressed during the picture video part of a video field, said method being characterized by the steps of:
obtaining timing signals from the video vertical blanking interval, VBI, providing the timing signals to a microprocessor programmed to determine horizontal sync pulse timing and to provide a horizontal sync gate signal from the timing signals in the VBI, using the microprocessor to provide a horizontal sync gate signal from the timing signals in the VBI, and using the horizontal sync gate signals to restore suppressed horizontal sync pulses.

15. The method of claim 14 further characterized in that the suppressed sync encoded video signals are encoded by either a) shifting the level of horizontal sync pulses or b) attenuating the horizontal sync pulses.

16. The method of claim 14 further characterized in that the timing signals in the VBI are unsuppressed horizontal and vertical sync pulses in the VBI.

17. The method of claim 14 further characterized in that the timing signals in the VBI are inserted in the VBI during signal encoding.

## Patentansprüche

1. Decoder zum Decodieren unterdrückter sync-codierter Fernsehvideosignale, bei denen horizontale Sync-Pulse während des Bildteils eines Videohalbbildes unterdrückt sind, **dadurch gekennzeichnet**, daß
der Decoder einen Mikroprozessor (32), der so programmiert ist, daß er horizontale Sync-Zeitsignale von Zeitsignalen in der vertikalen Austastlücke bestimmen kann, eine Einrichtung (24) zum Bereitstellen der Zeitsignale an den Mikroprozessor während der vertikalen Austastlücke, weiterhin einen Sync-Wiederherstellungsschaltkreis (22) enthält, der mit dem Mikroprozessor verbunden ist, wobei der Mikroprozessor weiterhin so programmiert ist, daß er, basierend auf den Zeitsignalen, während der vertikalen Austastlücke an den Sync-Wiederherstelungsschaltkreis ein horizontales Sync-Gattersignal bereitstellt, wodurch der Sync-Wiederherstellungsschaltkreis (22) die unterdrückten horizontalen Sync-Pulse wiederherstellt.

2. Decoder nach Anspruch 1, dadurch gekennzeichnet, daß die Zeitsignale in der vertikalen Austastlücke nicht-unterdrückte horizontale und vertikale Sync-Pulse während der vertikalen Austastlücke sind.

3. Decoder nach Anspruch 2, dadurch gekennzeichnet, daß der Mikroprozessor (32) so programmiert ist, daß er seinen Zeit-Rekonstruktionszyklus zu Beginn der vertikalen Sync-Zeiten initiiert und das horizontale Sync-Gattersignal nach dem letzten nicht-unterdrückten horizontalen Sync-Zeitsignal während der vertikalen Austastlücke beginnt.

4. Decoder nach Anspruch 3, dadurch gekennzeichnet, daß der Mikroprozessor (32) so programmiert ist, daß er ein horizontales Sync-Gattersignal für jeden unterdrückten horizontalen Sync-Puls während der Bildperiode zur Verfügung stellt.

5. Decoder nach Anspruch 1, **dadurch gekennzeichnet**, daß der horizontale Sync-Puls während des Videobildes durch a) Verschieben des Pegels der horizontalen Sync-Pulse auf ein Basisband-Videosignal oder b) durch Schwächen der horizontalen Sync-Pulse eines Videosignals unterdrückt wird.

6. Decoder nach Anspruch 1, **dadurch gekennzeichnet**, daß die Videocodierung periodische Videosignalpolaritätsinversionen einschließt, der Mikroprozessor (32) so programmiert ist, daß er ein Videoinversions-Flag detektiert und einen Videoinversionsgatterausgang als Ergebnis davon bereitstellt.

7. Decoder nach Anspruch 1, **dadurch gekennzeichnet**, daß die horizontalen und vertikalen Sync-Pulse in der vertikalen Austastlücke unterdrückt werden und daß die Zeitsignale während der vertikalen Austastlücke in die vertikale Austastlücke während der Signalcodierung eingesetzt werden.

8. Decoder nach Anspruch 7, **dadurch gekennzeichnet**, daß der Mikroprozessor so programmiert ist, daß er bei Detektion der vertikalen Austastlücken-Zeitsignale die Amplitude der vertikalen Austastlücke, welche die Sync-Pulse enthält, erhöht.

9. Decoder nach Anspruch 8, **dadurch gekennzeichnet**, daß der Mikroprozessor (32) so programmiert ist, daß er die erhöhten horizontalen Sync-Pulsamplituden während jeder vertikalen Austastlücke verwendet, um das Timing für ein horizontales Sync-Gattersignal zu erzeugen, um die Amplitude von horizontalen Sync-Pulsen während des Videobildes zu erhöhen.

10. Decoder nach Anpruch 7, **dadurch gekennzeichnet**, daß das vertikale Austastlückenzeitsignal in aufeinanderfolgenden horizontalen Zeilen aus einer Vielzahl von in etwa gleich beabstandeten Pulsen in einer ersten Zeile und einem Kompliment der Vielzahl von beabstandeten Pulsen in einer nachfolgenden Zeile besteht.

11. Decoder nach Anspruch 10, **dadurch gekennzeichnet**, daß das vertikale Austastlückenzeitsignal in einer der ersten horizontalen Zeile mit einer Vielzahl von beabstandeten Pulsen vorangehenden horizontalen Zeile eine horizontale Zeile enthält, die einen etwa konstanten IRE-Pegel über zumindest einen größeren Teil davon aufweist, wobei der IRE-Pegel gleich dem der Pulse in der nachfolgenden Zeile ist.

12. Decoder nach Anspruch 1, **dadurch gekennzeichnet**, daß der Mikroprozessor ein Taktsignal aufweist, welches asynchron zu dem empfangenen horizontalen Sync-Signal ist.

13. Decoder nach Anspruch 1, **dadurch gekennzeichnet**, daß das Mikroprozessorprogramm eine Vielzahl von Segmenten aufweist, wobei jedes Programmsegment die Fähigkeit des Erkennens eines bestimmten Zeitsignals aufweist und ein horizontales Sync-Wiederherstellungsgatter bereitstellt, welches auf eine spezielle Version der horizontalen Sync-Unterdrückung reagiert, wobei die Programmsegmente durch externe Einrichtungen auswählbar sind.

14. Verfahren zum Decodieren eines unterdrückten sync-codierten Videosignals, bei dem das horizontale Sync-Signal während des Bildteils des Videohalbbildes unterdrückt ist, wobei das Verfahren durch folgende Schritte gekennzeichnet ist:
Erhalten von Zeitsignalen von dem Intervall der vertikalen Austastlücke (VBI), Bereitstellen der Zeitsignale an einen Mikroprozessor, der programmiert ist, um ein horizontales Sync-Pulstiming zu bestimmen und um ein horizontales Sync-Gattersignal von den Timingsignalen während der VBI bereitzustellen, Verwenden des Mikroprozessors, um ein horizontales Sync-Gattersignal aus den Timingsignalen während der VBI bereitszustellen und Verwenden der horizontalen Sync-Gattersignale, um die unterdrückten horizontalen Sync-Pulse wiederherzustellen.

15. Verfahren nach Anspruch 14, **dadurch gekennzeichnet**, daß die unterdrückten sync-codierten Videosignale entweder durch a) Verschieben des Pegels der horizontalen Sync-Pulse oder b) Schwächen der horizontalen Sync-Pulse codiert werden.

16. Verfahren nach Anspruch 14, **dadurch gekennzeichnet**, daß die Zeitsignale während der VBI nicht-unterdrückte horizontale und vertikale Sync-Pulse während der VBI sind.

17. Verfahren nach Anspruch 14, **dadurch gekennzeichnet**, daß die Zeitsignale während der VBI in die VBI während der Signalcodierung eingesetzt werden.

## Revendications

1. Décodeur pour décoder des signaux vidéo de télévision codés à synchronisation supprimée dans lequel des impulsions de synchronisation horizontale sont supprimées pendant la partie vidéo d'image d'un champ vidéo, caractérisé en ce que:
ledit décodeur comporte un microprocesseur (32) programmé pour déterminer le cadencement de synchronisation horizontale à partir de signaux de cadencement dans l'intervalle de suppression de trame IST, un moyen (24) pour fournir les signaux de cadencement dans l'IST au microprocesseur, un circuit de régénération de synchronisation (22) connecté audit microprocesseur, ledit microprocesseur étant en outre programmé pour fournir un signal de déclenchement de synchronisation horizontale fondé sur les signaux de cadencement dans l'IST audit circuit de régénération de synchronisation, afin que ledit circuit de régénération de synchronisation (22) régénère les impulsions de synchronisation horizontale supprimées.

2. Décodeur selon la revendication 1, caractérisé en outre en ce que les signaux de cadencement dans l'IST sont des impulsions de synchronisation horizontale et verticale non supprimées dans l'IST.

3. Décodeur selon la revendication 2, caractérisé en outre en ce que ledit microprocesseur (32) est programmé pour commencer son cycle de régénération de cadencement au début d'un cadencement de synchronisation verticale et pour commencer le signal de déclenchement de synchronisation horizontale après la dernier signal de cadencement de synchronisation horizontale non supprimé dans l'IST.

4. Décodeur selon la revendication 3, caractérisé en outre en ce que ledit microprocesseur (32) est programmé pour fournir un signal de déclenchement de synchronisation horizontale pour chaque impulsion de synchronisation horizontale supprimée pendant une période de la partie vidéo de l'image.

5. Décodeur selon la revendication 1, caractérisé en outre en ce que l'impulsion de synchronisation horizontale peut être supprimée pendant la partie vidéo de l'image par a) décalage du niveau des impulsions de synchronisation horizontale d'un signal vidéo en bande de base, ou b) atténuation des impulsions de synchronisation horizontale d'un signal vidéo.

6. Décodeur selon la revendication 1, caractérisé en outre en ce que le codage vidéo met en jeu une inversion périodique de la polarité du signal vidéo, ledit microprocesseur (32) étant programmé pour détecter un indicateur d'inversion vidéo et fournir une sortie de déclenchement d'inversion vidéo comme résultat.

7. Décodeur selon la revendication 1, caractérisé en ce que les impulsions de synchronisation horizontale et verticale dans l'IST initial sont supprimées et en ce que les signaux de cadencement dans l'IST sont insérés dans l'IST pendant le codage des signaux.

8. Décodeur selon la revendication 7, caractérisé en outre en ce que ledit microprocesseur est programmé, lors de la détection des signaux de cadencement de l'IST, pour augmenter l'amplitude des impulsions de synchronisation dans l'IST.

9. Décodeur selon la revendication 8, caractérisé en outre en ce que ledit microprocesseur (32) est programmé pour exploiter les impulsions de synchronisation horizontale d'amplitude accrue pendant chaque IST pour produire un cadencement destiné au signal de déclenchement de synchronisation horizontale afin d'augmenter l'amplitude des impulsions de synchronisation horizontale pendant la partie vidéo de l'image.

10. Décodeur selon la revendication 7, caractérisé en outre en ce que le signal de cadencement de l'IST est constitué, dans des lignes horizontales successives, d'un ensemble d'impulsions généralement également réparties dans une première ligne, et d'un complément dudit ensemble d'impulsions espacées dans la ligne suivante.

11. Décodeur selon la revendication 10, caractérisé en outre en ce que ledit signal de cadencement de l'IST comporte, dans une ligne horizontale précédant la première ligne horizontale ayant un ensemble d'impulsions espacées, une ligne horizontale qui a un niveau IRE globalement constant sur au moins une partie notable de celle-ci, le niveau IRE étant égal à celui des impulsions de la ligne suivante.

12. Décodeur selon la revendication 1, caractérisé en outre en ce que le microprocesseur a un signal d'horloge qui est asynchrone par rapport à la synchronisation horizontale reçue.

13. Décodeur selon la revendication 1, caractérisé en outre en ce que le programme du microprocesseur (32) comporte des segments multiples, chaque segment de programme ayant la capacité de reconnaître un signal de cadencement particulier et de fournir un déclenchement de régénération de synchronisation horizontale en réponse à une version particulière de la suppression de synchronisation horizontale, lesdits segments de programme pouvant être sélectionnés par des moyens extérieurs au microprocesseur.

14. Procédé de décodage de signaux vidéo codés à synchronisation supprimée dans lequel la synchronisation horizontale est supprimée pendant la partie vidéo d' image d'un champ vidéo, ledit procédé étant caractérisé par les étapes:
d'obtention de signaux de cadencement à partir de l'intervalle de suppression de trame IST, de fourniture des signaux de cadencement à un microprocesseur programmé pour déterminer le cadencement des impulsions de synchronisation horizontale et pour fournir un signal de déclenchement de synchronisation horizontale à partir des signaux de cadencement dans l'IST, d'utilisation du microprocesseur pour fournir un signal de déclenchement de synchronisation horizontale à partir des signaux de cadencement dans l'IST, et d'utilisation des signaux de déclenchement de synchronisation horizontale pour régénérer des impulsions de synchronisation horizontale supprimées.

15. Procédé selon la revendication 14, caractérisé en outre en ce que les signaux vidéo codés à synchronisation supprimée sont codés soit a) par décalage du niveau d'impulsions de synchronisation horizontale, soit b) par atténuation des impulsions de synchronisation horizontale.

16. Procédé selon la revendication 14, caractérisé en outre en ce que les signaux de cadencement dans l'IST sont des impulsions de synchronisation horizontale et verticale non supprimées dans l'IST.

17. Procédé selon la revendication 14, caractérisé en outre en ce que les signaux de cadencement dans l'IST sont insérés dans l'IST pendant le codage des signaux.
